# EUROPÄISCHE PATENTSCHRIFT

(11) **EP 2 799 681 B1**
(45) Veröffentlichungstag und Bekanntmachung des Hinweises auf die Patenterteilung: **01.03.2017**
(21) Anmeldenummer: 14163667.0
(22) Anmeldetag: 07.04.2014
(51) Int. Cl.: F01N 3/24, F01N 3/28, F01N 13/08, F01N 13/18, F01N 3/021

(54) **Abgasanlagenkomponente**
Component of exhaust gas system
Composant de ligne d'échappement

(30) Priorität: 03.05.2013 DE 102013208184
(43) Veröffentlichungstag der Anmeldung: 05.11.2014
(73) Patentinhaber: Eberspächer Exhaust Technology GmbH & Co. KG, 66539 Neunkirchen (DE)
(72) Erfinder: Bäumchen, Carsten, 66649 Oberthal (DE)
(74) Vertreter: BRP Renaud & Partner mbB Rechtsanwälte Patentanwälte Steuerberater

(56) Entgegenhaltungen:
- DE-A1- 10 357 953
- DE-A1- 19 962 311
- DE-A1-102004 037 480
- DE-C1- 10 021 809
- US-A- 1 736 319
- US-A- 4 570 747

## Beschreibung

Die vorliegende Erfindung betrifft eine Abgasanlagenkomponente für eine Abgasanlage einer Brennkraftmaschine, mit den Merkmalen des Oberbegriffs des Anspruchs 1 oder des Anspruchs 5.

Komponenten von Abgasanlagen sind beispielsweise Schalldämpfer, Partikelfilter, Katalysatoren. Bekannt sind auch komplexe Abgasbehandlungseinrichtungen, die gleichzeitig mehrere Funktionen vereinen und beispielsweise einen Partikelfilter, verschiedene Katalysatoren und einen Schalldämpfer beinhalten können. Bei SCR-Anlagen existiert zusätzlich zu einem SCR-Katalysator eine Reduktionsmitteleinbringeinrichtung, mit deren Hilfe ein in der Regel flüssiges Reduktionsmittel stromauf des SCR-Katalysators in einen Abgasstrom eingebracht werden kann. Um das Reduktionsmittel mit dem Abgas hinreichend durchmischen zu können, ist es üblich, zwischen der Reduktionsmitteleinbringeinrichtung und dem SCR-Katalysator ein Mischrohr anzuordnen, das eine Mischstrecke definiert und/oder das einen statischen Mischer enthalten kann. SCR steht dabei für "Selective Catalytic Reduction". Als Reduktionsmittel kommt in der Regel eine wässrige Harnstofflösung in Betracht.

Bei einer Vielzahl derartiger Abgasanlagenkomponenten ist es üblich, dass ein erstes Bauteil in ein zweites Bauteil eingesteckt ist. Beispielsweise kann bei einer derartigen Komponente ein Rohr als erstes Bauteil der Komponente durch einen Boden als zweites Bauteil der Komponente hindurchgeführt sein. Hierzu kann der jeweilige Boden eine Durchgangsöffnung aufweisen, die von einem Umlauf eingefasst ist. Dieser Umlauf ist dabei zweckmäßig integral am jeweiligen Boden ausgeformt. Beispielsweise kann ein derartiger Umlauf als sogenannter "Durchzug" hergestellt sein, also durch Umformung. Dieser Umlauf definiert dabei einen außenliegenden Mantelabschnitt des zweiten Bauteils. Ein im Umlauf angeordneter Abschnitt des Rohrs definiert dabei einen innenliegenden Mantelabschnitt des ersten Bauteils. Zur Fixierung des Rohrs am Boden ist es üblich, mehrere, in der Umfangsrichtung verteilte Schweißpunkte zu setzen oder eine geschlossen umlaufende Schweißnaht anzubringen. Um das Rohr einfach in die Durchgangsöffnung einstecken zu können, ist üblicherweise ein Radialspiel zwischen einer Außenkontur des Rohrs und einer Innenkontur des Umlaufs vorgesehen. Das Radialspiel kann für den Fall, dass keine umlaufende Schweißnaht, sondern nur verteilt angeordnete Schweißpunkte verwendet werden, so bemessen sein, dass eine hinreichende Abdichtung zwischen dem Boden und dem Rohr erreicht werden kann. Die Dichtungswirkung wird dabei nach Art eines Drosseldichtspalts erzielt. Im Vordergrund steht dabei die Vermeidung übermäßiger Leckagen, während eine besonders hohe Dichtungswirkung in der Regel nicht erforderlich ist. Um die gewünschte Dichtungswirkung zu erzielen, ist es erforderlich, dass das Radialspiel in der Umfangsrichtung möglichst gleichmäßig verteilt ist. Sofern höhere Anforderungen an die Dichtigkeit der Verbindung gestellt werden, ist jedoch das Anbringen einer geschlossen umlaufenden Schweißnaht bevorzugt. Es hat sich gezeigt, dass bei herkömmlicher Montage im Bereich des ersten Schweißpunkts bzw. des Beginns der Schweißnaht das Radialspiel in der Regel am Kleinsten ist, während es diametral gegenüber des ersten Schweißpunkts bzw. des Schweißnahtbeginns in der Regel am Größten ist. Hierdurch kann es zu aufwändigen Nacharbeiten kommen.

Ein entsprechendes Problem ergibt sich auch beim Einsetzen eines statischen Mischers als erstes Bauteil in ein Abgasrohr als weites Bauteil, wenn ein Mantel des Mischers mittels Schweißstellen in dem Abgasrohr fixiert werden soll.

Eine gattungsgemäße Abgasanlagenkomponente für eine Abgasanlage einer Brennkraftmaschine ist beispielsweise aus der DE 103 57 953 A1 bekannt. Sie umfasst mindestens ein metallisches erstes Bauteil, das in ein metallisches zweites Bauteil eingesteckt ist, derart, dass ein innenliegender Mantelabschnitt des ersten Bauteils koaxial in einem außenliegenden Mantelabschnitt des zweiten Bauteils angeordnet ist, und mindestens eine Schweißstelle, die den außenliegenden Mantelabschnitt mit dem innenliegenden Mantelabschnitt fest verbindet, wobei mehrere Zentrierkonturen zum Zentrieren des innenliegenden Mantelabschnitts im außenliegenden Mantelabschnitt vorgesehen sind, die nach innen vorstehend am außenliegenden Mantelabschnitt und/oder nach außen vorstehend am innenliegenden Mantelabschnitt integral ausgeformt und in der Umfangsrichtung voneinander beabstandet sind. Im Allgemeinen ist das zweite Bauteil durch einen Boden gebildet, der mindestens eine Durchgangsöffnung aufweist, wobei der außenliegende Mantelabschnitt durch einen Umlauf des Bodens gebildet ist, der die jeweilige Durchgangsöffnung einfasst, vom Boden absteht und am Boden integral ausgeformt ist, wobei das erste Bauteil durch ein Anbauteil gebildet ist, das den Boden in der Durchgangsöffnung durchsetzt, wobei der innenliegende Mantelabschnitt durch einen in der Durchgangsöffnung liegenden Mantelabschnitt des Anbauteils gebildet ist, wobei die Zentrierkonturen den Mantelabschnitt im Umlauf zentrieren und nach innen vorstehend am Umlauf und/oder nach außen vorstehend am Mantelabschnitt integral ausgeformt sind. Im Besonderen ist das erste Bauteil durch einen statischen Mischer gebildet, wobei das zweite Bauteil durch ein abgasführendes Abgasrohr gebildet ist, in das der Mischer eingesetzt ist, wobei der innenliegende Mantelabschnitt durch einen Mantel des Mischers gebildet ist, der eine Mischstruktur des Mischers einfasst, wobei der außenliegende Mantelabschnitt durch einen Rohrabschnitt des Abgasrohrs gebildet ist, in dem der Mantel des Mischers liegt, wobei die Zentrierkonturen den Mantel im Abgasrohr zentrieren und nach innen vorstehend am Abgasrohr und/oder nach außen vorstehend am Mantel integral ausgeformt sind.

Die vorliegende Erfindung beschäftigt sich mit dem Problem, für eine Abgasanlagenkomponente eine verbesserte Ausführungsform anzugeben, die sich insbesondere dadurch auszeichnet, dass der Aufwand zur Herstellung reduziert ist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, an den ineinander gesteckten Bauteilen Zentrierkonturen vorzusehen, welche die ineinander gesteckten Bauteile relativ zueinander zentrieren, also konzentrisch zueinander ausrichten. Derartige Zentrierkonturen können dabei integral an einer Außenkontur des innen liegenden Bauteils, also am innenliegenden Mantelabschnitt, und/oder integral an einer Innenkontur des außen liegenden Bauteils, also am außenliegenden Mantelabschnitt, ausgebildet sein. Diese Zentrierkonturen sind dabei in der Umfangsrichtung verteilt angeordnet und außerdem in der Umfangsrichtung zueinander beabstandet angeordnet. Mit Hilfe der Zentrierkonturen wird bereits vor dem Herstellen der Schweißverbindung eine zentrierte Anordnung zwischen den miteinander zu verbindenden Bauteilen erreicht, so dass ein gegebenenfalls vorhandenes Radialspiel zwischen den beiden Bauteilen in der Umfangsrichtung gleichmäßig verteilt ist. Auch bewirken die Zentrierkonturen, dass sich die zentrierte Anordnung, insbesondere das Radialspiel beim Herstellen der Schweißverbindung nicht mehr verändert oder zumindest nicht wesentlich verändert, so dass die Gefahr aufwändiger Nacharbeiten erheblich reduziert ist. Das Vorsehen der Zentrierkonturen führt somit zu einer verbesserten Herstellungsqualität bei reduziertem Nacharbeitsaufwand.

Gemäß einer vorteilhaften Ausführungsform kann das zweite Bauteil durch einen Boden gebildet sein, der mindestens eine Durchgangsöffnung aufweist, während der außenliegende Mantelabschnitt durch einen Umlauf des Bodens gebildet ist, der die jeweilige Durchgangsöffnung einfasst, der vom Boden absteht und der am Boden integral ausgeformt ist. Das erste Bauteil ist dann durch ein Anbauteil gebildet, das den Boden in der Durchgangsöffnung durchsetzt, wobei der innenliegende Mantelabschnitt durch einen in der Durchgangsöffnung liegenden Mantelabschnitt des Anbauteils gebildet ist. Für eine solche Abgasanlagenkomponente mit metallischem Boden und metallischem Anbauteil bedeutet dies, dass derartige Zentrierkonturen nach innen vorstehend am Umlauf des Bodens und/oder nach außen vorstehend an einem Mantelabschnitt des Anbauteils integral ausgeformt und in der Umfangsrichtung voneinander beabstandet sind.

Alternativ kann vorgesehen sein, dass das erste Bauteil durch einen statischen Mischer gebildet ist, dass das zweite Bauteil durch ein abgasführendes Abgasrohr gebildet ist, in das der Mischer eingesetzt ist, dass der innenliegende Mantelabschnitt durch einen Mantel des Mischers gebildet ist, der eine Mischstruktur des Mischers einfasst, und dass der außenliegende Mantelabschnitt durch einen Rohrabschnitt des Abgasrohrs gebildet ist, in dem der Mantel des Mischers liegt. Für eine derartige als Abgasmischrohr ausgestaltete Abgasanlagenkomponente mit metallischem Mischer und metallischem Abgasrohr bedeutet dies, dass die Zentrierkonturen nach außen vorstehend am Mantel des statischen Mischers und/oder nach innen vorstehend am Abgasrohr integral ausgeformt und in der Umfangsrichtung voneinander beabstandet angeordnet sind.

In beiden Fällen lassen sich die Zentrierkonturen einfach und preiswert während der Herstellung des Bodens bzw. des Anbauteils, einerseits, sowie bei der Herstellung des Abgasrohrs bzw. des Mischers, andererseits, berücksichtigen. In der Folge lässt sich das jeweilige Abgasmischrohr bzw. die jeweilige Abgasanlagenkomponente quasi ohne Mehrkosten einfacher herstellen.

Erfindungsgemäß stützt sich die jeweilige außenliegende, insbesondere umlaufseitige oder abgasrohrseitige, Zentrierkontur an der Außenkontur des innenliegenden Mantelabschnitts ab. Auf diese Weise wird ein körperlicher Kontakt zwischen dem innen liegenden Bauteil, insbesondere Anbauteil oder Mischer, und dem außen liegenden Bauteil, insbesondere Boden oder Abgasrohr, erreicht, wodurch die Zentrierung besonders effizient ist.

Zusätzlich oder alternativ stützt sich die jeweilige innenliegende, insbesondere mantelabschnittsseitige bzw. mantelseitige, Zentrierkontur an der Innenkontur des außenliegenden Mantelabschnitts ab. Auch diese Maßnahme führt zu einem unmittelbaren körperlichen Kontakt, der die Zentrierung besonders effizient realisiert.

Bei einer vorteilhaften Ausführungsform kann radial zwischen der Außenkontur des innenliegenden Mantelabschnitts und der Innenkontur des außenliegenden Mantelabschnitts ein Radialspiel vorgesehen sein, das von den Zentrierkonturen überbrückt wird. Mit Hilfe der Zentrierkonturen wird dieses Radialspiel in der Umfangsrichtung gleichmäßig verteilt, wodurch sich zwischen den ineinander gesteckten Bauteilen in der Umfangsrichtung ein gleichmäßiger Luftspalt einstellt, der in der Umfangsrichtung lediglich durch die Zentrierkonturen lokal unterbrochen ist.

Entsprechend einer anderen vorteilhaften Ausführungsform kann zumindest eine solche Zentrierkontur durch eine lokale plastische Umformung des jeweiligen Mantelabschnitts gebildet sein. Die Realisierung der jeweiligen Zentrierkontur mittels plastischer Umformung lässt sich besonders preiswert realisieren und einfach in den jeweiligen Herstellungsvorgang des entsprechenden Bauteils integrieren.

Entsprechend einer anderen vorteilhaften Ausführungsform kann zumindest eine solche Zentrierkontur durch einen Nocken oder durch eine Sicke gebildet sein. Eine als Nocken ausgeführte Zentrierkontur führt zu einem punktförmigen Kontakt zwischen den ineinander gesteckten Bauteilen. Eine als Sicke ausgestaltete Zentrierkontur führt dagegen zu einem linienförmigen Kontakt der ineinander gesteckten Bauteile.

Von besonderem Interesse ist eine Weiterbildung, bei welcher die jeweilige Sicke in der Axialrichtung orientiert ist. Die Axialrichtung ist dabei diejenige Richtung, in der die beiden Bauteile ineinander gesteckt sind. Durch die axiale Ausrichtung der jeweiligen Sicke vereinfacht sich das Einstecken der beiden Bauteile ineinander.

Entsprechend einer anderen vorteilhaften Ausführungsform kann die jeweilige Zentrierkontur von den Schweißstellen in der Umfangsrichtung beabstandet angeordnet sein. Mit anderen Worten, die Schweißstellen werden jeweils in der Umfangsrichtung zwischen benachbarten Zentrierkonturen hergestellt. Auf diese Weise kann eine Beschädigung der Zentrierkonturen durch die Schweißpunkte vermieden werden. Ebenso ist eine Asuführungsfrom denkbar, bei welcher die Schweißstellen genau in den Zentrierkonturen angeordnet sind. Im Bereich der Zentrierkonturen ist der Abstand zwischen den aneinander zu befestigenden Bauteilen minimiert, was das Anbringen von Schweißpunkten erheblich verinfacht. Zusätzlich oder alternativ kann vorgesehen sein, dass die Zentrierkonturen axial von der jeweiligen Schweißverbindung beabstandet sind. Beispielsweise kann eine als Zweiblechnaht konfigurierte Schweißnaht eine axiale Stirnseite des innenliegenden Bauteils mit einer axialen Stirnseite des Umlaufs des außenliegenden Bauteils verbinden.

Gemäß einer anderen Ausführungsform kann vorgesehen sein, dass der Boden ein Endboden eines Gehäuses einer Abgasnachbehandlungseinrichtung ist, wobei das Anbauteil ein Einlassrohr oder ein Auslassrohr der Abgasnachbehandlungseinrichtung ist.

Bevorzugt handelt es sich beim Boden dagegen um einen Zwischenboden eines Gehäuses einer Abgasnachbehandlungseinrichtung, der zwischen zwei Endböden des Gehäuses angeordnet ist. Hierdurch ist es insbesondere möglich, die Endböden hinreichend dicht mit einem Gehäusemantel zu verbinden, um Leckagen von Abgas in die Umgebung der Abgasnachbehandlungseinrichtung zu vermeiden. Interne Leckagen können dabei toleriert werden.

Entsprechend einer anderen vorteilhaften Ausführungsform kann das Anbauteil ein Mantelrohr zur Aufnahme wenigstens eines Abgasnachbehandlungselements sein. Ein derartiges Mantelrohr kann üblicherweise auch als "Canning" bezeichnet werden. In einem derartigen Mantelrohr kann das jeweilige Abgasnachbehandlungselement beispielsweise mit Hilfe einer Lagermatte gehalten werden. Typischerweise handelt es sich bei einem derartigen Abgasnachbehandlungselement um ein Katalysatorelement oder um ein Partikelfilterelement. Vorzugsweise sind diese Abgasnachbehandlungselemente monolithische Keramikkörper.

Alternativ kann es sich beim Anbauteil auch um ein Mischrohr zur Ausbildung einer Mischstrecke oder aber um einen statischen Mischer handeln. Sowohl das Mischrohr mit Mischstrecke als auch der statische Mischer dienen zur Durchmischung einer Abgasströmung mit einem Reduktionsmittel. Ein derartiges Mischrohr sowie ein derartiger Mischer werden insbesondere im Zusammenhang mit einer SCR-Anlage verwendet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1 bis 4: jeweils eine Axialansicht einer Abgasanlagenkomponente im Bereich eines Anbauteils, bei verschiedenen Ausführungsformen,
- Fig. 5 und 6: jeweils einen Längschnitt durch die Abgasanlagenkomponente im Bereich des Anbauteils bei weiteren Ausführungsformen.

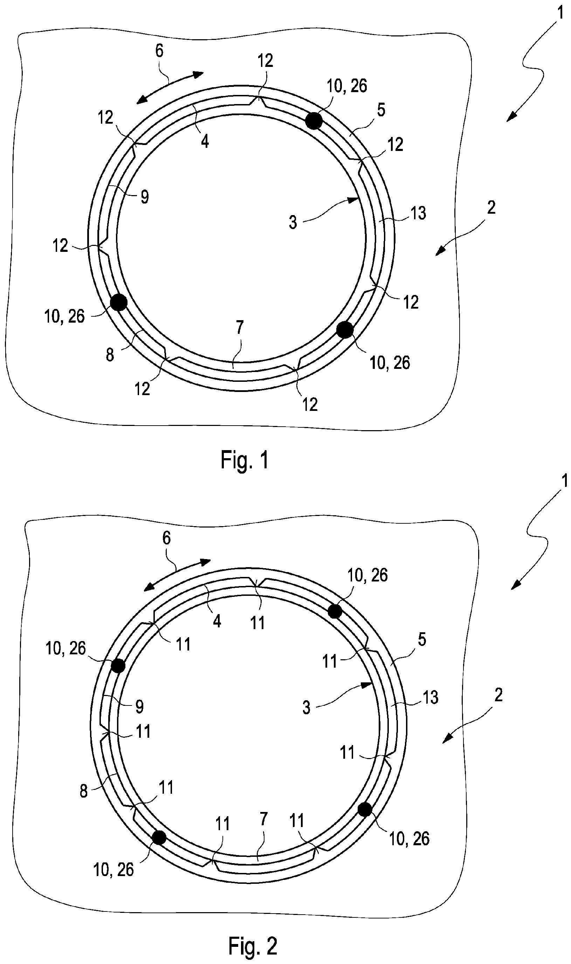

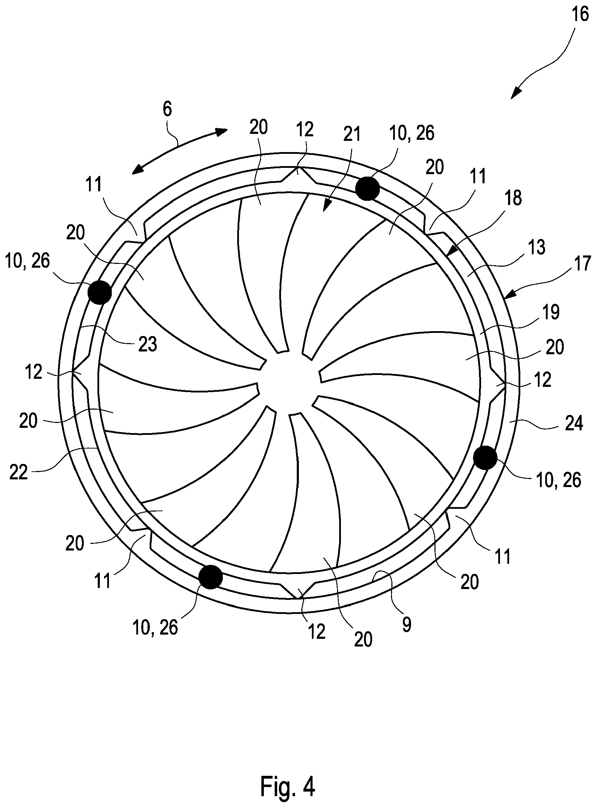

Entsprechend den Figuren 1 bis 6 umfasst eine Abgasanlagenkomponente 1, die für eine Verwendung in einer Abgasanlage einer Brennkraftmaschine, vorzugsweise eines Kraftfahrzeugs, vorgesehen ist, zumindest ein erstes Bauteil 3 gemäß den Fig. 1 bis 3, 5 und 6 bzw. ein ersten Bauteil 18 gemäß Fig. 4, das aus Metall hergestellt ist. Ferner ist auch ein zweites Bauteil 2 gemäß den Fig. 1 bis 3, 5 und 6 bzw. ein zweites Bauteil 17 gemäß Fig. 4 vorgesehen, das ebenfalls aus Metall hergestellt ist. In den Fig. 1 bis 3, 5 und 6 ist eine allgemeine Abgasanlagenkomponente 1 dargestellt, bei der das erste Bauteil 3 als Anbauteil ausgestaltet ist, das im Folgenden ebenfalls mit 3 bezeichnet wird und das durch das zweite Bauteil 2 hindurchgeführt ist, das hier als Boden ausgestaltet ist, der in Folgenden ebenfalls mit 2 bezeichnet wird. Im Unterschied dazu zeigt Fig. 4 exemplarisch eine spezielle Ausführungsform, bei der die Abgasanlagenkomponente 1 als Abgasmischrohr 16 ausgestaltet ist, das für sich einen Abschnitt in einem Abgasstrang der Abgasanlage bilden kann oder in eine komplexere Abgasanlagenkomponente eingebaut sein kann. Bei diesem Abgasmischrohr 16 ist das erste Bauteil 18 durch einen statischen Mischer gebildet, der im Folgenden ebenfalls mit 18 bezeichnet wird, während das zweite Bauteil 17 durch ein Abgasrohr gebildet ist, in das der Mischer 18 eingesetzt ist und das im Folgenden ebenfalls mit 17 bezeichnet wird.

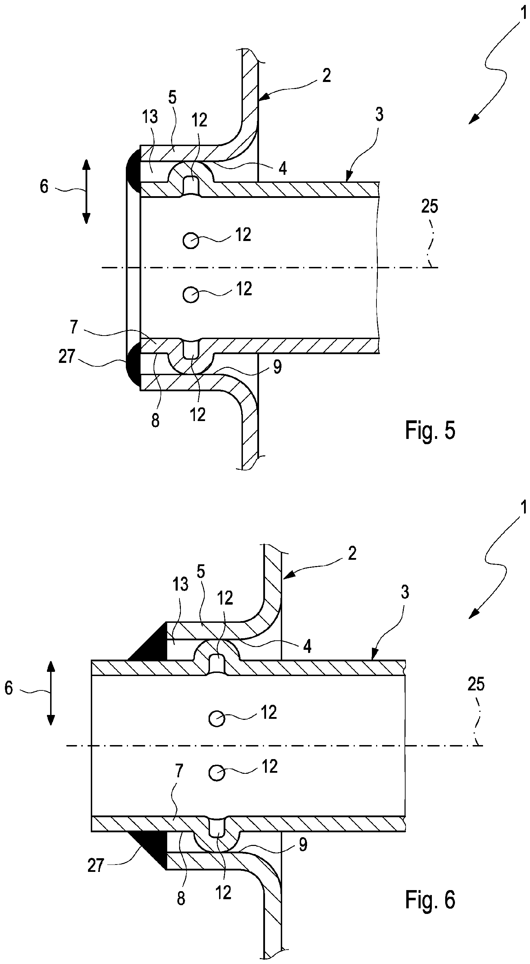

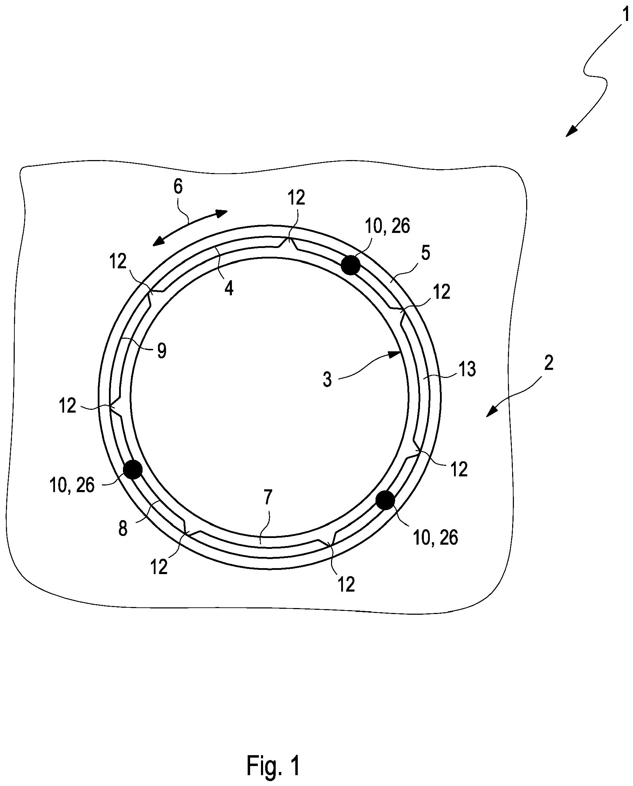

Entsprechen den Fig. 1 bis 3, 5 und 6 umfasst somit die Abgasanlagenkomponente 1 zumindest einen metallischen Boden 2, der hier nur teilweise dargestellt ist, und zumindest ein metallisches Anbauteil 3. Der Boden 2 weist zumindest eine Durchgangsöffnung 4 auf, die von einem Umlauf 5 in einer Umfangsrichtung 6 vollständig eingefasst ist. Der Umlauf 5 ist dabei am Boden 2 integral ausgeformt. Dabei steht der Umlauf 5 in einer senkrecht zur Zeichnungsebene der Fig. 1 bis 3 verlaufenden Axialrichtung vom Boden 2 ab, die in den Fig. 5 und 6 einer Längsmittelachse 25 entspricht. Vorzugsweise wird ein derartiger Umlauf 5 in Form eines Durchzugs hergestellt, also durch Umformung eines die Durchgangsöffnung 4 nach innen begrenzenden Rands.

Das Anbauteil 3 weist einen Mantelabschnitt 7 auf, der in die Durchgangsöffnung 4 axial eingesteckt ist. Dabei ist eine Außenkontur 8 des Mantelabschnitts 7 im Wesentlichen komplementär zu einer Innenkontur 9 des Umlaufs 5 geformt. Bei den hier gezeigten Beispielen erstrecken sich der Umlauf 5 und der Mantelabschnitt 7 jeweils kreisförmig. Es ist klar, dass grundsätzlich beliebige andere runde oder unrunde Querschnittsgeometrien verwendet werden können, ohne den Gedanken der vorliegenden Erfindung zu verlassen.

Im Einbauzustand definiert der Umlauf 5 einen außenliegenden Mantelabschnitt des Bodens 2, während der darin angeordnete Mantelabschnitt 7 einen innenliegenden Mantelabschnitt des Anbauteils 3 definiert.

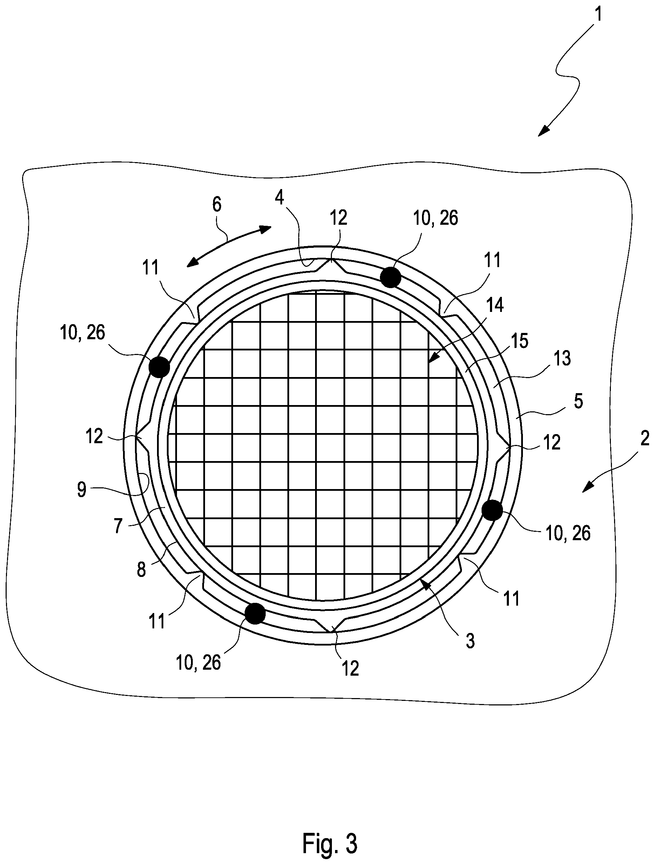

Zur Fixierung des Anbauteils 3 am Boden 2 sind bei den Ausführungsformen der Fig. 1 bis 4 mehrere, in der Umfangsrichtung 6 verteilt angeordnete und in der Umfangsrichtung 6 voneinander beabstandet angeordnete Schweißstellen 10 vorgesehen, die hier durch Schweißpunkte 26 gebildet sind. Um Unterschied dazu zeigen Fig. 5 und jeweils eine Ausführungsform, bei der nur eine einzige Schweißstelle 10 vorgesehen ist, die hier als in der Umfangsrichtung 6 geschlossen umlaufende Schweißnaht 27 ausgestaltete ist. Die jeweilige Schweißstelle 10 verbindet den Umlauf 5 fest mit dem Mantelabschnitt 7. Im Beispiel der Figur 1 sind rein exemplarisch drei derartige Schweißstellen 10 dargestellt. In den Beispielen der Figuren 2 und 3 sind rein exemplarisch vier derartige Schweißstellen 10 dargestellt. In den Fig. 5 und 6 ist dagegen nur eine einzige Schweißstelle 10 vorgesehen. Es ist klar, dass grundsätzlich auch mehr oder weniger Schweißstellen 10 vorhanden sein können.

Die hier vorgestellte Abgasanlagenkomponente 1 zeichnet sich außerdem durch mehrere Zentrierkonturen 11, 12 aus, die ein Zentrieren des Mantelabschnitts 7 im Umlauf 5 bewirken. Zum einen können gemäß den Figuren 2 und 3 am Umlauf 5 radial nach innen vorstehende Zentrierkonturen 11 vorgesehen sein. Zum anderen können gemäß den Ausführungsformen der Figuren 1, 3, 5 und 6 am Mantelabschnitt 7 radial nach außen vorstehende Zentrierkonturen 12 vorgesehen sein. Die am Umlauf 5 vorgesehenen Zentrierkonturen 11 sind dabei integral am Umlauf 5 ausgeformt. Die am Mantelabschnitt 7 vorgesehenen Zentrierkonturen 12 sind dabei integral am Mantelabschnitt 7 ausgeformt. Die Zentrierkonturen 11, 12 sind in der Umfangsrichtung 6 voneinander beabstandet angeordnet. Die Zentrierkonturen 11, 12 sind zweckmäßig so dimensioniert, dass sie eine unmittelbare Kontaktierung der beiden ineinander gesteckten Bauteile, also einerseits des Bodens 2 und andererseits des Anbauteils 3 bewirken. Zum einen können sich die umlaufseitigen Zentrierkonturen 11 an der Außenkontur 8 des Mantelabschnitts 7 direkt abstützen. Zum anderen können sich die mantelabschnittsseitigen Zentrierkonturen 12 an der Innenkontur 9 des Umlaufs 5 direkt abstützen.

Bei den hier gezeigten Ausführungsformen ist radial zwischen der Außenkontur 8 des Mantelabschnitts 7 und der Innenkontur des Umlaufs 5 ein Radialspiel 13 ausgebildet, das von den Zentrierkonturen 11, 12 überbrückt wird. Die Zentrierkonturen 11, 12 bewirken durch die konzentrische Ausrichtung der beiden ineinander gesteckten Bauteile 2, 3 eine gleichmäßige Verteilung des Radialspiels 13 in der Umfangsrichtung 6.

Die jeweilige Zentrierkontur 11, 12 ist zweckmäßig durch eine lokale plastische Umformung des Umlaufs 5 bzw. des Mantelabschnitts 7 ausgebildet. Beispielsweise kann eine derartige Zentrierkontur 11, 12 durch einen punktförmigen Nocken oder durch eine linienförmige Sicke gebildet sein. Zweckmäßig erstreckt sich die jeweilige Sicke dabei parallel zur Axialrichtung.

Bei den hier gezeigten Ausführungsformen der Fig. 1 bis 4 sind die Zentrierkonturen 11, 12 von den Schweißstellen 10 in der Umfangsrichtung 6 beabstandet angeordnet. Bei den in den Fig. 5 und 6 gezeigten Ausführungsformen sind die Zentrierkonturen 12 von der Schweißstelle 10 axial beabstandet angeordnet. In beiden Fällen ist die Schweißnaht 27 als Zweiblechnaht konfiguriert. Bei der in Fig. 5 gezeigten Ausführungsform ist die Schweißnaht 27 an den beiden axialen Stirnseiten des Anbauteils 3 und des Umlaufs 5 angebracht ist, derart, dass sie den Radialspalt 13 überbrückt und dicht verschließt. Im Unterschied dazu ist die Schweißnaht 27 bei der in Fig. 6 gezeigten Ausführungsform so angebracht, dass sie die axiale Stirnseite des Umlaufs 5 mit der Außenkontur 8 bzw. mit der Außenseite des Anbauteils 3 verbindet und dabei ebenfalls den Radialspalt 13 dicht verschließt.

Bei den Ausführungsformen der Figuren 1 bis 3, 5 und 6 kann es sich beim Boden 2 grundsätzlich um einen Endboden eines hier nicht gezeigten Gehäuses einer Abgasnachbehandlungseinrichtung handeln. Das Anbauteil 3 kann dann zweckmäßig ein Einlassrohr oder ein Auslassrohr dieser Abgasnachbehandlungseinrichtung sein. Alternativ dazu kann es sich beim Boden 2 auch um einen Zwischenboden eines hier nicht gezeigten Gehäuses einer Abgasnachbehandlungseinrichtung handeln. Ein derartiger Zwischenboden befindet sich dabei zwischen zwei Endböden des Gehäuses. Beim Anbauteil 3, das in die Durchgangsöffnung 4 eines derartigen Zwischenbodens eingesteckt ist, kann es sich beispielsweise gemäß Figur 3 um ein Mantelrohr zur Aufnahme eines Abgasnachbehandlungselements 14 handeln. Das Abgasnachbehandlungselement 14 ist beispielsweise ein Partikelfilterelement oder ein Katalysatorelement. Das Abgasnachbehandlungselement 14 kann im Mantelrohr, also im Anbauteil 3 mit Hilfe einer Lagermatte 15 lagefixiert sein. Beim Anbauteil 3 kann es sich gemäß den Figuren 1 und 2 auch um ein Mischrohr zur Ausbildung einer Mischstrecke zur Durchmischung einer Abgasströmung mit einem Reduktionsmittel handeln. Ebenso kann das Anbauteil 3 ein statischer Mischer 18 sein, wie er bei der in Figur 4 gezeigten Ausführungsform vorgesehen ist.

Entsprechend Figur 4 kann ein Abgasmischrohr 16, das sich für eine Verwendung in einer Abgasanlage einer Brennkraftmaschine, insbesondere eines Kraftfahrzeugs, eignet, ein abgasführendes Abgasrohr 17 und einen darin eingesetzten statischen Mischer 18 aufweisen. Das Abgasrohr 17 ist für einen Einbau in die Abgasanlage oder für einen Einbau in eine Abgasnachbehandlungseinrichtung der Abgasanlage vorgesehen. Der statische Mischer 18 ist in das Abgasrohr 17 eingesetzt und dient im Betrieb der Abgasanlage zur Durchmischung der Abgasströmung, beispielsweise mit einem Reduktionsmittel. Der Mischer 18 weist einen Mantel 19 auf, von dem beispielsweise mehrere Leitschaufeln 20 radial nach innen abstehen können. Die Leitschaufeln 20 bilden dabei eine Mischerstruktur 21, die vom Mantel 19 eingefasst ist. Der Mantel 19 besitzt eine Außenkontur 22, die im Wesentlichen komplementär zu einer Innenkontur 23 des Abgasrohrs 17 geformt ist. Zur Fixierung des Mischers 18 am Abgasrohr 17 sind mehrere, in der Umfangsrichtung 6 voneinander beabstandete Schweißstellen 10 vorgesehen, die jeweils den Mantel 19 mit dem Abgasrohr 17 fest verbinden. Auch hier sind die Schweißstellen 10 bevorzugt Schweißpunkte.

Im Einbauzustand definiert der Mantel 19 einen innenliegenden Mantelabschnitt des Mischer 18, während ein Rohrabschnitt 24 des Abgasrohrs 17, in dem der Mantel 19 positioniert ist, einen außenliegenden Mantelabschnitt des Abgasrohrs 17 definiert.

Um bei diesem Abgasmischrohr 16 den Mischer 18 zum Abgasrohr 17 zu zentrieren, können auch hier mehrere Zentrierkonturen 11, 12 vorgesehen sein. Die einen Zentrierkonturen 11 sind dabei wieder nach innen vorstehend am Abgasrohr 17 integral ausgeformt. Die anderen Zentrierkonturen 12 sind nach außen vorstehend am Mantel 19 integral ausgeformt. Auch hier sind die Zentrierkonturen 11, 12 in der Umfangsrichtung 6 voneinander beabstandet angeordnet.

Die Abstimmung der Zentrierkonturen 11, 12 auf das Abgasrohr 17 und den Mischer 18 erfolgt zweckmäßig so, dass sich die abgasrohrseitigen Zentrierkonturen 11 an der Außenkontur 22 des Mantels 19 abstützen. Zweckmäßig können sich die mantelseitigen Zentrierkonturen 12 an der Innenkontur 23 des Abgasrohrs 17 abstützen.

Obwohl bei der in Figur 4 gezeigten Ausführungsform analog zu der in Figur 3 gezeigten Ausführungsform sowohl nach innen vorstehende Zentrierkonturen 11 als auch nach außen vorstehende Zentrierkonturen 12 vorgesehen sind, sind auch Ausführungsformen denkbar, bei denen nur nach innen vorstehende Zentrierkonturen analog zu Figur 2 oder nur nach außen vorstehende Zentrierkonturen 12 analog zu den Figuren 1, 5 und 6 vorhanden sein können.

Auch bei der in Figur 4 gezeigten Ausführungsform kann radial zwischen der Außenkontur 22 des Mantels 19 und der Innenkontur 23 des Abgasrohrs 17 ein Radialspiel 13 vorhanden sein, das von den Zentrierkonturen 11, 12 überbrückt wird.

Zweckmäßig sind auch bei diesem Beispiel die Zentrierkonturen 11, 12 durch lokale plastische Umformung des Abgasrohrs 17 bzw. des Mantels 19 gebildet. Zumindest eine derartige Zentrierkontur 11, 12 kann durch einen punktförmigen Nocken oder durch eine linienförmige Sicke gebildet sein. Eine derartige sickenförmige Zentrierkontur 11, 12 kann sich dabei in der Axialrichtung erstrecken.

Auch hier ist die Anordnung der Schweißstellen 10 zweckmäßig auf die Positionierung der Zentrierkonturen 11, 12 abgestimmt, derart, dass die Schweißstellen 10 in der Umfangsrichtung von den Zentrierkonturen 11, 12 beabstandet sind.

## Patentansprüche

1. Abgasanlagenkomponente für eine Abgasanlage einer Brennkraftmaschine,
- mit mindestens einem metallischen ersten Bauteil (3; 18), das in ein metallisches zweites Bauteil (2; 17) eingesteckt ist, derart, dass ein innenliegender Mantelabschnitt (7; 19) des ersten Bauteils (3; 18) koaxial in einem außenliegenden Mantelabschnitt (5; 24) des zweiten Bauteils (2; 17) angeordnet ist,
- mit mindestens einer Schweißstelle (10), die den außenliegenden Mantelabschnitt (5; 24) mit dem innenliegenden Mantelabschnitt (7; 19) fest verbindet,
- wobei mehrere Zentrierkonturen (11, 12) zum Zentrieren des innenliegenden Mantelabschnitts (7; 19) im außenliegenden Mantelabschnitt (5, 24) vorgesehen sind, die nach innen vorstehend am außenliegenden Mantelabschnitt (5, 24) und/oder nach außen vorstehend am innenliegenden Mantelabschnitt (7; 19) integral ausgeformt und in der Umfangsrichtung (6) voneinander beabstandet sind,
- wobei das zweite Bauteil durch einen Boden (2) gebildet ist, der mindestens eine Durchgangsöffnung (4) aufweist,
- wobei der außenliegende Mantelabschnitt durch einen Umlauf (5) des Bodens (2) gebildet ist, der die jeweilige Durchgangsöffnung (4) einfasst, vom Boden (2) absteht und am Boden (2) integral ausgeformt ist,
- wobei das erste Bauteil durch ein Anbauteil (3) gebildet ist, das den Boden (2) in der Durchgangsöffnung (4) durchsetzt,
- wobei der innenliegende Mantelabschnitt durch einen in der Durchgangsöffnung (4) liegenden Mantelabschnitt (7) des Anbauteils (3) gebildet ist,
- wobei die Zentrierkonturen (11, 12) den Mantelabschnitt (7) im Umlauf (5) zentrieren und nach innen vorstehend am Umlauf (5) und/oder nach außen vorstehend am Mantelabschnitt (7) integral ausgeformt sind,
**dadurch gekennzeichnet,**
- **dass** sich die jeweilige außenliegende Zentrierkontur (11) an einer Außenkontur (8) des innenliegenden Mantelabschnitts (7; 19) abstützt, und/oder
- **dass** sich die jeweilige innenliegende Zentrierkontur (12) an einer Innenkontur (9) des außenliegenden Mantelabschnitts (5; 24) abstützt.

2. Abgasanlagenkomponente nach Anspruch 1,
**dadurch gekennzeichnet,**
**dass** der Boden (2) ein Endboden eines Gehäuses einer Abgasnachbehandlungseinrichtung ist, wobei das Anbauteil (3) ein Einlassrohr oder ein Auslassrohr der Abgasnachbehandlungseinrichtung ist.

3. Abgasanlagenkomponente nach Anspruch 1,
**dadurch gekennzeichnet,**
**dass** der Boden (2) ein Zwischenboden eines Gehäuses einer Abgasnachbehandlungseinrichtung ist, der zwischen zwei Endböden des Gehäuses angeordnet ist.

4. Abgasanlagenkomponente nach Anspruch 3,
**dadurch gekennzeichnet,**
**dass** das Anbauteil (3) ein Mantelrohr zur Aufnahme wenigstens eines Abgasnachbehandlungselements (14) oder ein Mischrohr zur Ausbildung einer Mischstrecke oder ein statischer Mischer (18) zur Durchmischung einer Abgasströmung mit einem Reduktionsmittel ist.

5. Abgasanlagenkomponente für eine Abgasanlage einer Brennkraftmaschine,
- mit mindestens einem metallischen ersten Bauteil (3; 18), das in ein metallisches zweites Bauteil (2; 17) eingesteckt ist, derart, dass ein innenliegender Mantelabschnitt (7; 19) des ersten Bauteils (3; 18) koaxial in einem außenliegenden Mantelabschnitt (5; 24) des zweiten Bauteils (2; 17) angeordnet ist,
- mit mindestens einer Schweißstelle (10), die den außenliegenden Mantelabschnitt (5; 24) mit dem innenliegenden Mantelabschnitt (7; 19) fest verbindet,
- wobei mehrere Zentrierkonturen (11, 12) zum Zentrieren des innenliegenden Mantelabschnitts (7; 19) im außenliegenden Mantelabschnitt (5, 24) vorgesehen sind, die nach innen vorstehend am außenliegenden Mantelabschnitt (5, 24) und/oder nach außen vorstehend am innenliegenden Mantelabschnitt (7; 19) integral ausgeformt und in der Umfangsrichtung (6) voneinander beabstandet sind,
- wobei das erste Bauteil durch einen statischen Mischer (18) gebildet ist,
- wobei das zweite Bauteil durch ein abgasführendes Abgasrohr (17) gebildet ist, in das der Mischer (18) eingesetzt ist,
- wobei der innenliegende Mantelabschnitt durch einen Mantel (19) des Mischers (18) gebildet ist, der eine Mischstruktur (21) des Mischers (18) einfasst,
- wobei der außenliegende Mantelabschnitt durch einen Rohrabschnitt (24) des Abgasrohrs (17) gebildet ist, in dem der Mantel (19) des Mischers (18) liegt,
- wobei die Zentrierkonturen (11, 12) den Mantel (19) im Abgasrohr (17) zentrieren und nach innen vorstehend am Abgasrohr (17) und/oder nach außen vorstehend am Mantel (19) integral ausgeformt sind,
**dadurch gekennzeichnet,**
- **dass** sich die jeweilige außenliegende Zentrierkontur (11) an einer Außenkontur (8) des innenliegenden Mantelabschnitts (7; 19) abstützt, und/oder
- **dass** sich die jeweilige innenliegende Zentrierkontur (12) an einer Innenkontur (9) des außenliegenden Mantelabschnitts (5; 24) abstützt.

6. Abgasanlagenkomponente nach einem der vorstehenden Ansprüche,
**dadurch gekennzeichnet,**
**dass** radial zwischen einer Außenkontur (8) des innenliegenden Mantelabschnitts (7; 19) und einer Innenkontur (9) des außenliegenden Mantelabschnitts (5; 24) ein Radialspiel (13) vorgesehen ist, das von den Zentrierkonturen (11, 12) überbrückt wird.

7. Abgasanlagenkomponente nach einem der vorstehenden Ansprüche,
**dadurch gekennzeichnet,**
**dass** zumindest eine solche Zentrierkontur (11, 12) durch eine lokale plastische Umformung des außenliegenden Mantelabschnitts (5; 24) oder des innenliegenden Mantelabschnitts (7; 19) gebildet ist.

8. Abgasanlagenkomponente nach einem der vorstehenden Ansprüche,
**dadurch gekennzeichnet,**
**dass** zumindest eine solche Zentrierkontur (11, 12) durch einen Nocken oder durch eine Sicke gebildet ist.

9. Abgasanlagenkomponente nach Anspruch 8,
**dadurch gekennzeichnet,**
**dass** die jeweilige Sicke in der Axialrichtung (25) orientiert ist.

10. Abgasanlagenkomponente nach einem der vorstehenden Ansprüche,
**dadurch gekennzeichnet,**
**dass** die jeweilige Schweißstelle (10) als in der Umfangsrichtung (6) geschlossen umlaufende Schweißnaht (27) ausgestaltet ist, wobei die jeweilige Schweißnaht (27) insbesondere von den Zentrierkonturen (11, 12) axial beabstandet sein kann.

11. Abgasanlagenkomponente nach einem der Ansprüche 1 bis 9
**dadurch gekennzeichnet,**
**dass** mehrere Schweißstellen (10) als Schweißpunkte (26) ausgestaltet und in der Umfangsrichtung (6) voneinander beabstandet sind.

12. Abgasanlagenkomponente nach den Ansprüchen 6 und 11,
**dadurch gekennzeichnet,**
**dass** das Radialspiel (13) von den Schweißpunkten (26) überbrückt wird.

13. Abgasanlagenkomponente nach Anspruch 11 oder 12,
**dadurch gekennzeichnet,**
**dass** die jeweilige Zentrierkontur (11, 12) von den Schweißstellen (10) in der Umfangsrichtung (6) und/oder in der Axialrichtung (25) beabstandet angeordnet ist.

## Claims

1. An exhaust system component for an exhaust system of an internal combustion engine,
- with at least one metallic first part (3; 18), which is inserted into a metallic second part (2; 17) in such a manner that a jacket section (7; 19) of the first part (3; 18) located inside is coaxially arranged in a jacket section (5; 24) of the second part (2; 17) located outside,
- with at least one weld (10), which connects the jacket section (5; 24) located outside to the jacket section (7; 19) located on the inside in a fixed manner,
- wherein multiple centring contours (11, 12) for centring the jacket section (7; 19) located inside in the jacket section (5, 24) located outside are provided, which are formed protruding to the inside on the jacket section (5, 24) located outside and/or are integrally formed protruding to the outside on the jacket section (7; 19) located inside and are spaced from one another in the circumferential direction (6),
- wherein the second part is formed by a bottom (2), which comprises at least one through-opening (4),
- wherein the jacket section located outside is formed by a rim (5) of the bottom (2), which encloses the respective through-opening (4), projects from the bottom (2) and is integrally formed on the bottom (2),
- wherein the first part is formed through an attachment part (3), which penetrates the bottom (2) in the through-opening (4),
- wherein the jacket section located inside is formed through a jacket section (7) of the attachment part (3) located in the through-opening (4),
- wherein the centring contours (11, 12) centre the jacket section (7) in the rim (5) and are integrally formed on the rim (5) protruding to the inside and/or are integrally formed on the jacket section (7) protruding to the outside,
**characterized in**
- **that** the respective centring contour (11) located outside supports itself on an outer contour (8) of the jacket section (7; 19) located inside, and/or
- **that** the respective centring contour (12) located inside supports itself on an inner contour (9) of the jacket section (5; 24) located outside.

2. The exhaust system component according to Claim 1,
**characterized in**
**that** the bottom (2) is an end bottom of a housing of an exhaust gas retreatment device, wherein the attachment part (3) is an inlet pipe or an outlet pipe of the exhaust gas retreatment device.

3. The exhaust system component according to Claim 1,
**characterized in**
**that** the bottom (2) is an intermediate bottom of a housing of an exhaust gas retreatment device which is arranged between two end bottoms of the housing.

4. The exhaust system component according to Claim 3,
**characterized in**
**that** the attachment part (3) is a jacket pipe for receiving at least one exhaust gas retreatment element (14) of a mixing pipe for forming a mixing section or a static mixer (18) for intermixing an exhaust gas flow with a reduction agent.

5. The exhaust system component for an exhaust system of an internal combustion engine,
- with at least one metallic first part (3; 18), which is inserted into a metallic second part (2; 17) in such a manner that a jacket section (7; 19) of the first part (3; 18) located inside is coaxially arranged in a jacket section (5; 24) of the second part (2; 17) located outside,
- with at least one weld (10), which connects the jacket section (5; 24) located outside to the jacket section (7; 19) located on the inside in a fixed manner,
- wherein multiple centring contours (11, 12) for centring the jacket section (7; 19) located inside in the jacket section (5, 24) located outside are provided, which are formed protruding to the inside on the jacket section (5, 24) located outside and/or are integrally formed protruding to the outside on the jacket section (7; 19) located inside and are spaced from one another in the circumferential direction (6),
- wherein the first part is formed by a static mixer (18),
- wherein the second part is formed by an exhaust gas-conducting exhaust pipe (17), into which the mixer (18) is inserted,
- wherein the jacket section located inside is formed by a jacket (19) of the mixer (18), which encloses a mixing structure (21) of the mixer (18),
- wherein the jacket section located outside is formed by a pipe section (24) of the exhaust pipe (17), in which the jacket (19) of the mixer (18) is located,
- wherein the centring contours (11, 12) centre the jacket (19) in the exhaust pipe (17) and are integrally formed on the exhaust pipe (17) protruding to the inside and/or are integrally formed on the jacket (19) protruding to the outside,
**characterized in**
- **that** the respective centring contour (11) located outside supports itself on an outer contour (8) of the jacket section (7; 19) located inside, and/or
- **that** the respective centring contour (12) located inside supports itself on an inner contour (9) of the jacket section (5; 24) located outside.

6. The exhaust system component according to any one of the preceding Claims,
**characterized in**
**that** radially between an outer contour (8) of the jacket section (7; 19) located inside and an inner contour (9) of the jacket section (5; 24) located outside a radial clearance (13) is provided, which is bridged by the centring contours (11, 12).

7. The exhaust system component according to any one of the preceding Claims,
**characterized in**
**that** at least one such centring contour (11, 12) is formed through a local plastic forming of the jacket section (5; 24) located outside or of the jacket section (7; 19) located inside.

8. The exhaust system component according to any one of the preceding Claims,
**characterized in**
**that** at least one such centring contour (11, 12) is formed by a projection or by a bead.

9. The exhaust system component according to Claim 8,
**characterized in**
**that** the respective bead is orientated in the axial direction (25).

10. The exhaust system component according to any one of the preceding Claims,
**characterized in**
**that** the respective weld (10) is configured as a weld seam (27) which is closed circumferentially in the circumferential direction (6), wherein the respective weld seam (27) can be axially spaced in particular from the centring contours (11, 12).

11. The exhaust system component according to any one of Claims 1 to 9,
**characterized in**
**that** multiple welds (10) are configured as spot welds (26) and are spaced from one another in the circumferential direction (6).

12. The exhaust system component according to Claims 6 and 11,
**characterized in**
**that** the radial clearance (13) is bridged by the spot welds (26).

13. The exhaust system component according to Claim 11 or 12,
**characterized in**
**that** the respective centring contour (11, 12) is arranged spaced from the welds (10) in the circumferential direction (6) and/or in the axial direction (25).

## Revendications

1. Composant de système d'échappement pour un système d'échappement d'un moteur à combustion interne,
- comprenant au moins un premier élément (3 ; 18) métallique, qui est enfiché dans un deuxième élément (2 ; 17) métallique de telle manière qu'un segment enveloppant (7 ; 19), situé à l'intérieur, du premier élément (3 ; 18) est disposé de manière coaxiale dans un segment enveloppant (5 ; 24), situé à l'extérieur, du deuxième élément (2 ; 17),
- comprenant au moins un emplacement de soudage (10), qui relie de manière solidaire le segment enveloppant (5; 24) situé à l'extérieur au segment enveloppant (7 ; 19) situé à l'intérieur,
- dans lequel plusieurs contours de centrage (11, 12) sont prévus afin de centrer le segment enveloppant (7 ; 19) situé à l'intérieur dans le segment enveloppant (5, 24) situé à l'extérieur, lesquels contours de centrage sont formés d'un seul tenant en faisant saillie vers l'intérieur au niveau du segment enveloppant (5, 24) situé à l'extérieur et/ou en faisant saillie vers l'extérieur au niveau du segment enveloppant (7; 19) situé à l'intérieur et qui sont espacés les uns des autres dans la direction périphérique (6),
- dans lequel le deuxième élément est formé par un fond (2), qui présente au moins une ouverture de passage (4),
- dans lequel le segment enveloppant situé à l'extérieur est formé par un rebord (5) du fond (2), qui encadre l'ouverture de passage (4) respective, qui dépasse du fond (2) et qui est formé d'un seul tenant au niveau du fond (2),
- dans lequel le premier élément est formé par un élément rapporté (3), qui traverse le fond (2) dans l'ouverture de passage (4),
- dans lequel le segment enveloppant situé à l'intérieur est formé par un segment enveloppant (7), situé dans l'ouverture de passage (4), de l'élément rapporté (3),
- dans lequel les contours de centrage (11, 12) centrent le segment enveloppant (7) dans le rebord (5) et sont formés d'un seul tenant, en faisant saillie vers l'intérieur, au niveau du rebord (5) et/ou en faisant saillie vers l'extérieur au niveau du segment enveloppant (7),
**caractérisé en ce**
- **que** le contour de centrage (11) respectif situé à l'extérieur prend appui au niveau d'un contour extérieur (8) du segment enveloppant (7 ; 19) situé à l'intérieur, et/ou
- **que** le contour de centrage (12) respectif situé à l'intérieur prend appui au niveau d'un contour intérieur (9) du segment enveloppant (5 ; 24) situé à l'extérieur.

2. Composant de système d'échappement selon la revendication 1,
**caractérisé en ce**
**que** le fond (2) est un fond d'extrémité d'un boîtier d'un dispositif de traitement ultérieur de gaz d'échappement, dans lequel l'élément rapporté (3) est un tuyau d'admission ou un tuyau d'évacuation du dispositif de traitement ultérieur de gaz d'échappement.

3. Composant de système d'échappement selon la revendication 1,
**caractérisé en ce**
**que** le fond (2) est un fond intermédiaire d'un boîtier d'un dispositif de traitement ultérieur de gaz d'échappement, qui est disposé entre deux fonds d'extrémité du boîtier.

4. Composant de système d'échappement selon la revendication 3,
**caractérisé en ce**
**que** l'élément rapporté (3) est un tuyau-enveloppe servant à recevoir au moins un élément de traitement ultérieur de gaz d'échappement (14) ou un tuyau de mélange servant à réaliser un tronçon de mélange ou un mélangeur (18) statique servant à mélanger un flux de gaz d'échappement et un agent de réduction.

5. Composant de système d'échappement pour un système d'échappement d'un moteur à combustion interne,
- comprenant au moins un premier élément (3 ; 18) métallique, qui est inséré dans un deuxième élément (2 ; 17) métallique de telle manière qu'un segment enveloppant (7 ; 19), situé à l'intérieur, du premier élément (3 ; 18) est disposé de manière coaxiale dans un segment enveloppant (5 ; 24), situé à l'extérieur, du deuxième élément (2 ; 17),
- comprenant au moins un emplacement de soudage (10), qui relie de manière solidaire le segment enveloppant (5 ; 24) situé à l'extérieur au segment enveloppant (7 ; 19) situé à l'intérieur,
- dans lequel plusieurs contours de centrage (11, 12) sont prévus afin de centrer le segment enveloppant (7 ; 19) situé à l'intérieur dans le segment enveloppant (5, 24) situé à l'extérieur, lesquels contours de centrage sont formés d'un seul tenant en faisant saillie vers l'intérieur au niveau du segment enveloppant (5, 24) situé à l'extérieur et/ou en faisant saillie vers l'extérieur au niveau du segment enveloppant (7; 19) situé à l'intérieur et qui sont espacés les uns des autres dans la direction périphérique (6),
- dans lequel le premier élément est formé par un mélangeur (18) statique,
- dans lequel le deuxième élément est formé par un tuyau de gaz d'échappement (17) conduisant les gaz d'échappement, dans lequel le mélangeur (18) est inséré,
- dans lequel le segment enveloppant situé à l'intérieur est formé par une enveloppe (19) du mélangeur (18), qui encadre une structure de mélange (21) du mélangeur (18),
- dans lequel le segment enveloppant situé à l'extérieur est formé par un segment de tuyau (24) du tuyau de gaz d'échappement (17), dans lequel l'enveloppe (19) du mélangeur (18) se trouve,
- dans lequel les contours de centrage (11, 12) centrent l'enveloppe (19) dans le tuyau de gaz d'échappement (17) et sont formés d'un seul tenant en faisant saillie vers l'intérieur au niveau du tuyau de gaz d'échappement (17) et/ou en faisant saillie vers l'extérieur au niveau de l'enveloppe (19),
**caractérisé en ce**
- **que** le contour de centrage (11) respectif situé à l'extérieur prend appui au niveau d'un contour extérieur (8) du segment d'enveloppe (7 ; 19) situé à l'intérieur, et/ou
- **que** le contour de centrage (12) respectif situé à l'intérieur prend appui au niveau d'un contour intérieur (9) du segment d'enveloppe (5 ; 24) situé à l'extérieur.

6. Composant de système d'échappement selon l'une quelconque des revendications précédentes,
**caractérisé en ce**
**qu'**un jeu radial (13) est prévu de manière radiale entre un contour extérieur (8) du segment enveloppant (7 ; 19) situé à l'intérieur et un contour intérieur (9) du segment enveloppant (5 ; 24) situé à l'extérieur, lequel est surmonté par les contours de centrage (11, 12).

7. Composant de système d'échappement selon l'une quelconque des revendications précédentes,
**caractérisé en ce**
**qu'**au moins un contour de centrage (11, 12) de ce type est formé par une mise en forme plastique locale du segment enveloppant (5 ; 24) situé à l'extérieur ou du segment enveloppant (7 ; 19) situé à l'intérieur.

8. Composant du système d'échappement selon l'une quelconque des revendications précédentes,
**caractérisé en ce**
**qu'**au moins un contour de centrage (11, 12) de ce type est formé par une came ou par une moulure.

9. Composant de système d'échappement selon la revendication 8,
**caractérisé en ce**
**que** la moulure respective est orientée dans la direction axiale (25).

10. Composant de système d'échappement selon l'une quelconque des revendications précédentes,
**caractérisé en ce**
**que** l'emplacement de soudage (10) respectif est configuré sous la forme d'un cordon de soudure (27) périphérique fermé dans la direction périphérique (6), dans lequel le cordon de soudure (27) périphérique peut être espacé de manière axiale des contours de centrage (11, 12).

11. Composant de système d'échappement selon l'une quelconque des ' revendications 1 à 9,
**caractérisé en ce**
**que** plusieurs emplacements de soudage (10) sont configurés sous la forme de points de soudage (26) et sont espacés les uns des autres dans la direction périphérique (6).

12. Composant de système d'échappement selon les revendications 6 et 11,
**caractérisé en ce**
**que** le jeu radial (13) est surmonté par les points de soudage (26).

13. Composant de système d'échappement selon la revendication 11 ou 12,
**caractérisé en ce**
**que** le contour de centrage (11, 12) respectif est disposé de manière espacée des emplacements de soudage (10) dans la direction périphérique (6) et/ou dans la direction axiale (25).
